# EUROPEAN PATENT APPLICATION

(11) **EP 2 490 067 A1**
(43) Date of publication of application: **22.08.2012**
(21) Application number: 12156040.3
(22) Date of filing: 17.02.2012
(51) Int. Cl.: G02F 1/13357, F21V 29/00, G02B 6/00

(54) **Display module and display apparatus**

(30) Priority: 21.02.2011 KR 20110015059
(71) Applicant: Samsung Electronics Co., Ltd., Suwon-si, Gyeonggi-do 442-742 (KR)
(72) Inventor: Kim, Jung Kyun, Seongnam-si (KR); Sung, Jee Hoon, Seongnam-si (KR)
(74) Representative: Waddington, Richard

(57) **Abstract**

A display module and display apparatus are disclosed. The display module including a light guide member, a bottom chassis disposed under the light guide member, and at least one light-emitting diode which irradiates light toward a side face of the light guide member. The diode is disposed to be in contact with the bottom chassis. Thus, heat generated from the light-emitting diode may be efficiently discharged from the bottom chassis. The display apparatus includes the display module.

## Description

### BACKGROUND

### 1. Field

Embodiments of the present inventive concept relate to a display module including a liquid crystal display panel for displaying an image and a backlight unit which irradiates light to the liquid crystal display panel, and a display apparatus including such a liquid crystal display panel.

### 2. Description of the Related Art

A display apparatus generally includes a display module from which an image is displayed. Recent trends are to widely employ a display module including a liquid crystal display panel.

In the liquid crystal display panel, liquid crystals are sealed between two transparent substrates and a voltage is applied to the liquid crystals so that the orientation of liquid crystals varies to change light transmittance thereof, thereby displaying the image in an optical manner.

Since such a liquid crystal display panel is not of a self-luminous type, the display module includes a backlight unit disposed at a rear side of the liquid crystal display panel to irradiate light to the panel.

### SUMMARY

According to the present invention there is provided an apparatus and method as set forth in the appended claims. Other features of the invention will be apparent from the dependent claims, and the description which follows.

Therefore, one aspect of the present inventive concept is to provide a display module having a backlight unit which is capable of more efficiently discharging heat generated from a light-emitting diode, and a display apparatus including the display module.

Additional aspects of the inventive concept will be set forth in part in the description which follows and, in part, will be obvious from the description, or may be learned by practice of the exemplary embodiments.

In accordance with one aspect of the present inventive concept, a display module includes a light guide member, a bottom chassis disposed under the light guide member, and at least one light-emitting diode to irradiate light toward a side face of the light guide member. The light-emitting diode is disposed in contact with the bottom chassis.

The display module may further include a heat-dissipating member to bring the light-emitting diode into indirect contact with the bottom chassis. The heat-dissipating member has a first face which is in contact with the light-emitting diode, and a second face disposed opposite the first face while being in contact with the bottom chassis.

The bottom chassis may include a heat-dissipating portion which protrudes toward and is in contact with the light-emitting diode.

The light-emitting diode may include a heat slug to guide heat generated from the light-emitting diode, guiding heat from the inside of the light-emitting diode to the outside of the light-emitting diode.

The display module may further include a printed circuit board on which the light-emitting diode is disposed. The heat slug may include a first end which is in contact with the printed circuit board.

The heat slug may include a second end which is in contact with the bottom chassis.

In accordance with another aspect of the present inventive concept, a display module includes a light guide member, a bottom chassis disposed under the light guide member, at least one light-emitting diode to irradiate light toward a side face of the light guide member, and a heat slug disposed at the light-emitting diode to guide heat generated from the light-emitting diode from the inside of the light-emitting diode to the outside of the light-emitting diode.

In accordance with another aspect of the present inventive concept, a display apparatus includes a display module to display an image. The display module includes a light guide member, a bottom chassis disposed under the light guide member, and at least one light-emitting diode to irradiate light toward a side face of the light guide member. The light-emitting diode is disposed in contact with the bottom chassis.

As mentioned above, the light-emitting diode is disposed to be in direct or indirect contact with the bottom chassis. As a result, the heat generated from the light-emitting diode may be efficiently discharged from the bottom chassis.

Moreover, the heat slug is disposed at the light-emitting diode to guide the heat generated from the light-emitting diode from the inside of the light-emitting diode to the outside of the light-emitting diode, resulting in more efficient dissipation of the heat generated from the light-emitting diode.

Another aspect of the exemplary embodiments include a display module having a light guide member; at least one light-emitting diode which irradiates light toward a side face of the light guide member; and a heat slug disposed at the light-emitting diode to guide heat generated from the light-emitting diode, guiding heat from an inside of the light-emitting diode to an outside of the light-emitting diode.

### BRIEF DESCRIPTION OF THE DRAWINGS

These and/or other aspects of the inventive concept will become apparent and more readily appreciated from the following description of the exemplary embodiments, taken in conjunction with the accompanying drawings of which:
FIG.1 is a perspective view of a display apparatus according to one exemplary embodiment of the present inventive concept;
FIG.2 is a disassembled perspective view of a display module according to one exemplary embodiment of the present inventive concept;
FIG.3 is a cross-sectional view of an end of a display module according to one exemplary embodiment of the present inventive concept in which a light-emitting diode module is disposed;
FIG.4 is a cross-sectional view of an end of a display module according to one exemplary embodiment of the present inventive concept in which a light-emitting diode module is not disposed; and
FIG.5 is a cross-sectional view of an end of a display module according to another exemplary embodiment of the present inventive concept in which a light-emitting diode module is disposed.

### DETAILED DESCRIPTION

Reference will now be made in detail to the exemplary embodiments of the present inventive concept, examples of which are illustrated in the accompanying drawings, wherein like reference numerals refer to like elements throughout.

Below, a display module according to one exemplary embodiment of the present inventive concept will be described in detail with reference to the accompanying drawings.

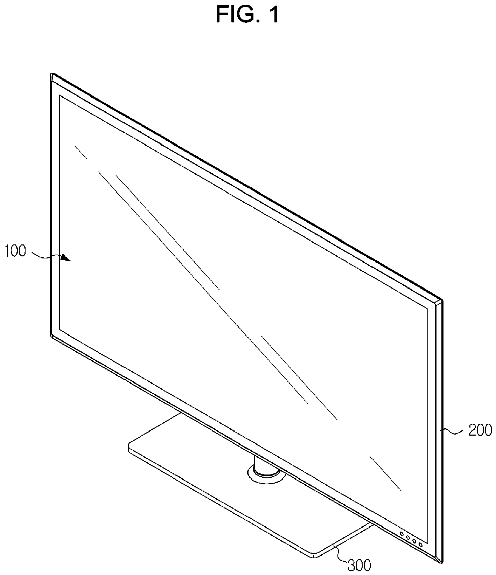

As shown in FIG. 1, a display apparatus includes a display module 100 from which an image is displayed, a case 200 accommodating the display module 100 therein, and a stand 300 enabling the case 200 accommodating the display module 100 therein to be installed in a substantially upright state on a horizontal plane such as a top surface of a desk or a living room cabinet.

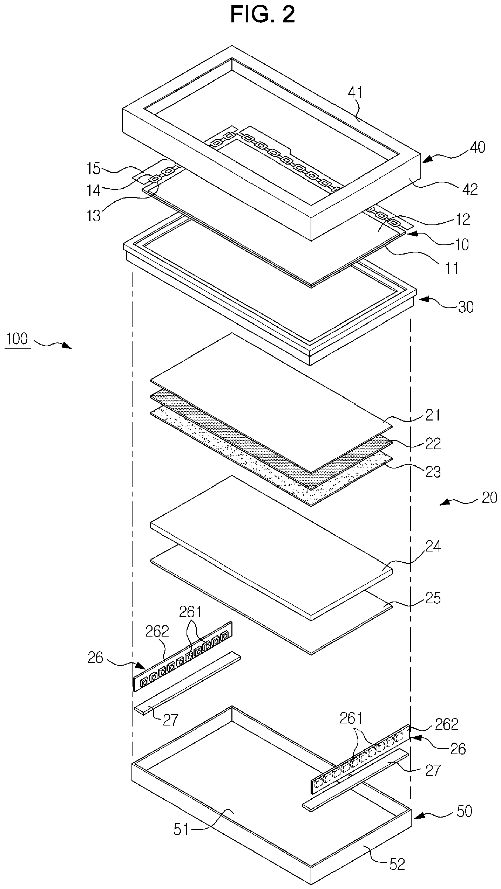

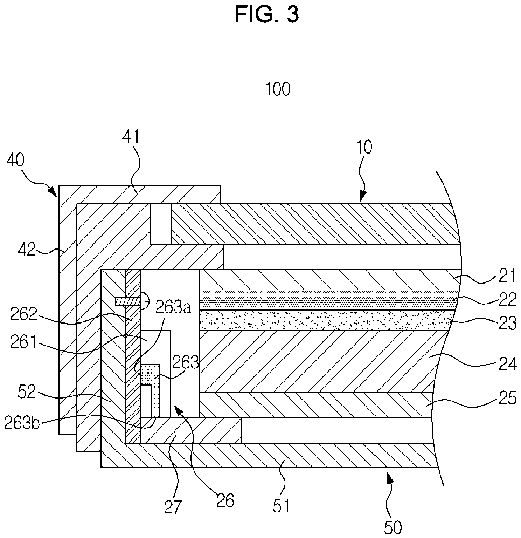

The display module 100, as shown in FIG. 2 and FIG. 3, may include a liquid crystal display panel 10, a backlight unit 20 disposed under and spaced from the liquid crystal display panel 10, a middle mold 30 to support the liquid crystal display panel 10 and the backlight unit 20 in a separated manner, and top and bottom chassis 40 and 50 disposed on the liquid crystal display panel 10 and under the backlight unit 20 respectively.

The liquid crystal display panel 10 includes a thin film transistor substrate 11 on which thin film transistors are formed, a color filer substrate 12 facing away from the thin film transistor substrate 11, and a liquid crystal layer (not shown) provided between the thin film transistor substrate 11 and the color filer substrate 12.

The thin film transistor substrate 11 includes, at one side thereof, a flexible printed circuit board 13, a driving chip 14 mounted on the flexible printed circuit board 13, and a panel circuit board 15 connected to a side of the flexible printed circuit board 13.

The above liquid crystal display panel 10 may form an image by controlling orientation of the liquid crystals in the liquid crystal layer (not shown). However, since the panel 10 is not of a self-luminous type, the panel 10 should receive light from the backlight unit 20, disposed at the rear face thereof, in order to display the image.

The backlight unit 20 includes a plurality of optical sheets 21 - 23 disposed under the liquid crystal display panel 10, a light guide member 24 beneath the optical sheets, a reflection sheet 25 beneath the light guide member 24, and a light-emitting diode module 26 to supply the light guide member 24 with light.

The optical sheets may include a protection film 21, a prism film 22 and a diffusion film 23.

The protection film is disposed on the prism film 22 to protect the prism film 22 which is sensitive to scratches, including dust, etc.

The prism film 22 is formed, at an upper surface thereof, with triangular prisms arranged in a regular basis so as to condense light diffused by the diffusion film 23 in a perpendicular direction to a plane of the panel 10 disposed above the film 22. The prism film 22 generally employs two prism sheets each having micro-prisms forming a given angle. A large portion of the light passing through the prism film 22 may advance perpendicularly to provide a uniform distribution of luminance.

The diffusion film 23 includes a coating layer with beads formed on a base substrate so as to supply light from the light guide member 24 to the liquid crystal display panel 10 after diffusing the light.

The light guide member 24 is made of acrylic resin such as polymethyl methacrylate (PMMA) or polymethylstyrene to uniformly supply the light from the light-emitting diode module 26 to the diffusion film 23. A side face of the light guide member 24 facing away from the light-emitting diode module 26 acts as an incident face upon which light emitted from the light-emitting diode module 26 is incident. A front face of the light guide member 24 facing the diffusion film 23 acts as a light-emitting face from which the light is emitted. A rear face of the light guide member 24 opposite the front face and facing the reflection sheet 25 acts as a reflection face to reflect the light.

The reflection sheet 25 is disposed beneath the light guide member 24 to guide the light emitted through the rear face of the light guide member 24 back to the light guide member 24. The reflection sheet 25 is made of a plastic material such as PET (polyethylene terephthalate) or PC (polycarbonate).

In the illustrated case, there are two light-emitting diode modules 26 which are disposed so as to respectively face away from two symmetric side faces from among the four side faces of the light guide member 24. Each light-emitting diode module 26 includes a plurality of light-emitting diodes 261 to emit light, and a printed circuit board 262 on which the light-emitting diodes 261 are disposed. The PCB 262 is formed with conductive pattern to transfer an electrical signal to the light-emitting diodes 261.

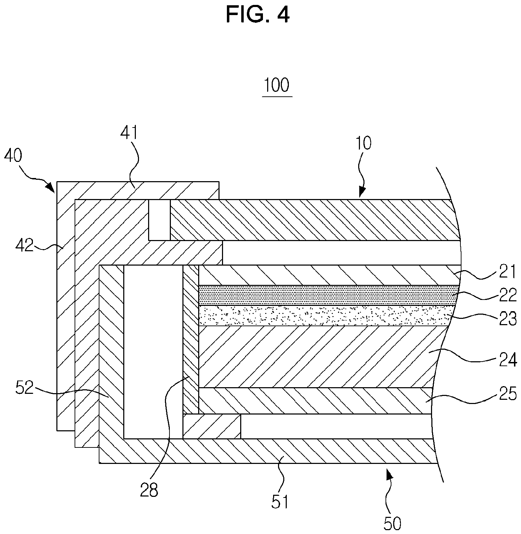

As shown in FIG.4, auxiliary reflection sheets 28 may be disposed on the side faces of the light guide member 24 toward which the light-emitting diode modules 26 are not disposed. In this manner, the light emitted through the side faces of the light guide member 24 may be guided back to the light guide member 24 by the auxiliary reflection sheets 28.

Referring back to FIG.3, the light-emitting diodes 261 are disposed so that light-emitting faces of the light-emitting diodes 261 from which light is emitted face away from the side incident faces of the light guide member 24. The diodes 261 are also connected to the printed circuit board 262 via faces of the diode 261 opposite the light-emitting faces.

The printed circuit board 262 has an elongated length corresponding to the side face of the light guide member 24 which faces away from the printed circuit board 262, and has a certain width in a thickness direction of the light guide member 24 to be fastened to the bottom chassis 50 using screws.

The plurality of light-emitting diodes 261 are disposed, in a manner spaced away from one another, in a length direction of the printed circuit board 262. The light-emitting diodes 261 are disposed, in a biased manner, at a lower portion of the printed circuit board 262 so that the conductive pattern is formed on the printed circuit board 262.

The printed circuit board 262 serves not only to transfer a drive signal to the light-emitting diodes 261, but also to transfer heat generated from the light-emitting diodes 261 to the outside.

Therefore, the printed circuit board 262 is formed of metal PCB (printed circuit board) made of a material with high thermal conductivity such as a silicon steel sheet, a galvanized steel sheet, an aluminum sheet, etc. The rear face of the printed circuit board 262 is in a tight contact with the bottom chassis 50 so that heat generated from the light-emitting diodes 261 is transferred to the bottom chassis 50 via the printed circuit board 262, and is dissipated from the bottom chassis 50.

The top chassis 40 may include a bezel portion 41 surrounding an edge of the liquid crystal display panel 10, and a top side portion 42 bent from an end of the bezel portion 41. The bezel portion 41 corresponds to a width portion of the liquid crystal display panel 10 extending from an outer line of the liquid crystal display panel 10 to an active area in which an image is actually displayed.

The bottom chassis 50 includes a bottom portion 51 on which the backlight unit 20 is seated, and a bottom side portion 52 extending upward from a periphery of the bottom portion 51. The bottom chassis 50 is made of a metal material with high thermal conductivity to dissipate the heat transferred from the light-emitting diode module 26.

In order to more efficiently discharge the heat generated from the light-emitting diodes 261, the light-emitting diodes 261 are disposed to be in contact with the bottom chassis 50 and hence the heat generated from the light-emitting diodes 261 may be transferred more rapidly to the bottom chassis 50.

In this embodiment, a heat-dissipating member 27 is disposed between one side face of the light-emitting diodes 261 and the bottom face 51 of the bottom chassis 50 and thus the light-emitting diodes 261 are in indirect contact with the bottom chassis 50 via the heat-dissipating member 27. Accordingly, the heat generated from the light-emitting diodes 261 is transferred to the bottom face 51 of the bottom chassis 50 via the heat-dissipating member 27 and then is dissipated from the bottom chassis 50.

The heat-dissipating member 27 is made of a metal material so as to facilitate thermal transfer and is disposed so that a first face at one side thereof is in contact with the light-emitting diodes 261 and a second face opposite the first face is in contact with the bottom chassis 50. In this manner, the heat generated from the light-emitting diodes 261 may be immediately transferred to the bottom chassis 50 via the heat-dissipating member 27. As a result, the heat generated from the light-emitting diodes 261 is transferred to the bottom chassis 50 via both the printed circuit board 262 and the heat-dissipating member 27, resulting in more efficient dissipation of the heat from the light-emitting diodes 261.

In order to more efficiently discharge the heat generated from the light-emitting diodes 261, heat slugs 263 are disposed at the light-emitting diodes 261, as shown in Fig. 3. Each heat slug 263 is made of a metal material so as to facilitate thermal transfer and allows the heat generated from the corresponding light-emitting diode 261 to be more easily transferred from the inside of the diode 261 to the outside. In this exemplary embodiment, the heat slug 263 is installed to penetrate the corresponding light-emitting diode 261, and includes a first end 263a which is in contact with the printed circuit board 262 and a second end 263b which is in contact with the heat-dissipating member 27.

Therefore, the heat generated from the light-emitting diodes 261 is guided from the inside of the diodes 261 to the outside via the heat slugs 263. That is, the heat generated from the light-emitting diodes 261 is transferred to the printed circuit board 262 via the first ends 263a of the heat slugs 263 and to the heat-dissipating member 27 via the second ends 263b of the heat slugs 263. Thus, a significant amount of the heat generated from the light-emitting diodes 261 may be rapidly transferred from the inside thereof to the outside using the heat slugs 263 made of the metal material, resulting in more efficient dissipation of the heat from the light-emitting diodes 261. In this embodiment, the light-emitting diodes 261 are in indirect contact with the bottom chassis 50 via the heat-dissipating member 27, but embodiments of the present inventive concept are not limited thereto.

Figure 4 shows a cross-sectional view of an end of a display module in which a light-emitting diode module is not disposed.

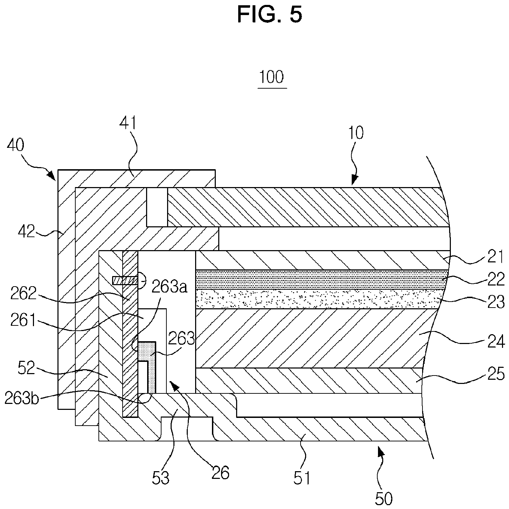

As shown in the exemplary embodiments of FIG. 5, the bottom chassis 50 may include a heat-dissipating portion 53 which protrudes toward and is in contact with the light-emitting diodes 261. Since each light-emitting diode 261 is in contact with the heat-dissipating portion 53, the second end 263b of the corresponding heat slug 263 is also in contact with the heat-dissipating portion 53. Accordingly, the heat generated from the light-emitting diodes 261 is directly transferred to the bottom chassis 50, resulting in more efficient dissipation of the heat from the light-emitting diodes 261.

In this exemplary embodiment, the printed circuit board 262 is made of a metal PCB, but exemplary embodiments of the present inventive concept are not limited thereto. For example, the printed circuit board 262 may be made of a flexible PCB (FPCB).

In this exemplary embodiment, there are two light-emitting diode modules 26 which are disposed so as to respectively face away from two symmetric side faces among four side faces of the light guide member 24. Exemplary embodiments of the present inventive concept, however, are not limited thereto. If necessary, it may be possible to include four light-emitting diode modules which are disposed so as to respectively face away from four side faces of the light emitting member. Otherwise, it may be possible to include only one light-emitting diode module which is disposed so as to face away from only any one of four side-faces of the light emitting member, etc.

Although a few exemplary embodiments of the present inventive concept have been shown and described, it would be appreciated by those skilled in the art that many changes may be made in these embodiments without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display module comprising:
a light guide member;
a bottom chassis disposed under the light guide member; and
at least one light-emitting diode to irradiate light toward a side face of the light guide member,
wherein the light-emitting diode is disposed to be in contact with the bottom chassis.

2. The display module according to claim 1, further comprising:
a heat-dissipating member to bring the light-emitting diode into indirect contact with the bottom chassis, the heat-dissipating member having a first face being in contact with the light-emitting diode, and a second face disposed opposite the first face while being in contact with the bottom chassis.

3. The display module according to claim 1, wherein the bottom chassis comprises a heat-dissipating portion which protrudes toward and is in contact with the light-emitting diode.

4. The display module according to claim 1, wherein the diode comprises a heat slug to guide heat generated from the light-emitting diode from an inside of the light-emitting diode to an outside of the light-emitting diode.

5. The display module according to claim 4, further comprising:
a printed circuit board on which the light-emitting diode is disposed,
wherein the heat slug comprises a first end being in contact with the printed circuit board.

6. The display module according to claim 5, wherein the heat slug comprises a second end being in contact with the bottom chassis.
